# FASCICULE DE BREVET EUROPEEN

(11) **EP 0 481 856 B1**
(45) Date de publication et mention de la délivrance du brevet: **17.11.1994**
(21) Numéro de dépôt: 91402721.4
(22) Date de dépôt: 11.10.1991
(51) Int. Cl.: H01M 2/16, H01M 2/14

(54) **Séparateur pour accumulateur alcalin**
Separator für alkalische Akkumulatoren
Separator for alkaline accumulator

(30) Priorité: 12.10.1990 FR 9012621
(43) Date de publication de la demande: 22.04.1992
(73) Titulaire: Société Anonyme dite SAFT, F-93230 Romainville (FR)
(72) Inventeur: Green, Anthony, F-33110 Le Bouscat (FR); Champalle, Patrice, F-33110 Le Bouscat (FR); Liska, Jean-Louis, F-33200 Bordeaux (FR)
(74) Mandataire: Weinmiller, Jürgen

(56) Documents cités:
- FR-A- 2 628 892
- PATENT ABSTRACTS OF JAPAN vol. 11, no. 117 (E-498)(2564)11 Avril 1987 & JP-A-61 264 685 ( MATSUSHITA ) 22 Novembre 1986

## Description

La présente invention concerne un séparateur pour accumulateur alcalin, et notamment pour accumulateur nickel-cadmium dont les électrodes peuvent présenter une structure frittée, une structure du genre mousse ou à base de fibres, ou une structure dans laquelle la matière active est consolidée par un polymère.

A l'heure actuelle les séparateurs mis en oeuvre dans ces accumulateurs sont de cinq types.
- Le premier type se compose d'une feuille microporeuse ondulée ou nervurée. Ce séparateur encombrant nécessite un certain écart entre deux électrodes limitant la capacité volumique de l'accumulateur. En outre on constate que, lorsque le niveau d'électrolyte baisse, le fonctionnement de l'accumulateur en est affecté.
- Le second type comporte d'une part une feuille microporeuse nervurée dont la face nervurée est appliquée contre l'électrode positive et d'autre part un feutre complémentaire du côté de la face plane. Il présente les mêmes inconvénients que le séparateur du premier type. En outre il est le siège d'une accumulation de poches de gaz entre les électrodes, gênante pour le fonctionnement.
- Le troisième type est constitué par un ensemble de barreaux en polyoléfine équidistants, de forme cylindrique ou prismatique, dont l'épaisseur détermine l'écartement des électrodes. Ce dernier est généralement de 0,8 à 1,2 mm.
   Un tel séparateur présente déjà les inconvénients du séparateur du premier type, et en outre il ne constitue pas une barrière efficace entre les électrodes contre les courts-circuits dans le cas où la distance inter-électrodes est inférieure à 1 mm.
- Le quatrième type, conforme à la description du brevet français FR-A- 2 628 892, est formé :
   . de deux feuilles de feutre en polyamide, polypropylène ou polyéthylène, d'épaisseur comprise entre 0,1 et 0,4 mm avec un grammage compris entre 10 et 100g/m²,
   . et d'une membrane en cellophane ou en polyoléfine interposée entre ces deux feutres, présentant une épaisseur comprise entre 0,02 et 0,03 mm.
      Le but de cette membrane est de faire barrière aux diffusions d'oxygène et non aux courts-circuits.
- Le cinquième type est constitué d'une feuille de PVC ondulée et perforée. Il présente les mêmes inconvénients que le séparateur du premier type et en outre il ne protège pas suffisamment les électrodes des courts-circuits.

La présente invention a pour but de mettre en oeuvre un séparateur permettant de réduire la distance entre les électrodes, c'est-à-dire d'accroître la capacité volumique, tout en formant une barrière efficace contre les courts-circuits et en évitant la formation de poches de gaz.

La présente invention a pour objet un séparateur pour accumulateur alcalin, et notamment pour accumulateur nickel-cadmium, constitué de deux feuilles de feutre en polypropylène, polyamide, ou polyéthylène, d'épaisseur comprise entre 0,1 mm et 0,4 mm avec un grammage compris entre 10 et 100g/m², et d'une feuille intermédiaire interposée entre ces deux feutres, séparateur caractérisé par le fait que ladite feuille intermédiaire est plane, qu'elle présente une épaisseur comprise entre 0,1 mm et 0,4 mm, qu'elle est en un copolymère fritté à base de polychlorure de vinyle ou de polyéthylène, que sa porosité est supérieure à 30%, que le diamètre de ses pores est compris entre 10 µm et 100 µm et que son grammage est compris entre 100 g/m² et 400 g/m².

De préférence, ledit grammage est de l'ordre de 220 g/m² et ledit diamètre de pores est compris entre 20 µm et 30 µm.

Ce séparateur peut être assemblé autour des électrodes sous forme de pochettes soudées ; il peut être également sous forme d'une bande continue disposée en accordéon entre les électrodes.

D'autres caractéristiques et avantages de la présente invention apparaîtront au cours de la description suivante de modes de réalisation donnés à titre illustratif mais nullement limitatif.

Dans le dessin annexé :
- La figure 1 est une vue partielle très schématique en coupe d'un séparateur de l'art antérieur correspondant au quatrième type précité.
- La figure 2 est une vue partielle très schématique en coupe d'un séparateur selon l'invention.

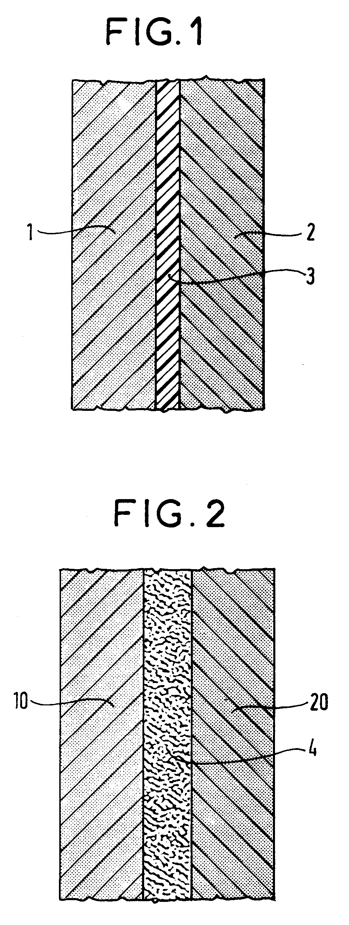

Le séparateur de la figure 1 est constitué de deux feuilles de feutre en polypropylène 1, 2, d'épaisseur 0,15 mm et de grammage 70g/m², avec une feuille de cellophane 3 interposée, d'épaisseur 0,02 mm.

Le séparateur de la figure 2 comporte un feutre de polyamide 10 d'épaisseur 0,15 mm et un feutre de polypropylène 20 d'épaisseur 0,1 mm. Une feuille plane intermédiaire 4 est constituée d'une structure microporeuse, réalisée par frittage d'un copolymère à base de polychlorure de vinyle, d'épaisseur 0,2 mm. Le grammage de cette feuille est de 220 g/m2 ; sa porosité est supérieure à 30% et son diamètre de pores est de l'ordre de 20 à 30 µm.

Le polychlorure de vinyle peut être remplacé par du polyéthylène.

Un accumulateur nickel-cadmium contenant des séparateurs de l'art antérieur présente une durée de vie de 1000 à 2000 heures en surcharge permanente à 40°C, avec une densité de courant de surcharge égale au dixième de la capacité de l'accumulateur. La mise en oeuvre d'un séparateur selon l'invention permet au moins de doubler la durée de vie de l'accumulateur dans les mêmes conditions de surcharge.

## Revendications

1. Séparateur pour accumulateur alcalin, et notamment pour accumulateur nickel-cadmium, constitué de deux feuilles de feutre en polypropylène, polyamide, ou polyéthylène, d'épaisseur comprise entre 0,1 mm et 0,4 mm avec un grammage compris entre 10 et 100g/m², et d'une feuille intermédiaire interposée entre ces deux feutres, séparateur caractérisé par le fait que ladite feuille intermédiaire est plane, qu'elle présente une épaisseur comprise entre 0,1 mm et 0,4 mm, qu'elle est en un copolymère fritté à base de polychlorure de vinyle ou de polyéthylène, que sa porosité est supérieure à 30%, que le diamètre de ses pores est compris entre 10 µm et 100 µm et que son grammage est compris entre 100 g/m² et 400 g/m².

2. Séparateur selon la revendication 1, caractérisé par le fait que le diamètre des pores de ladite feuille est compris entre 20 µm et 30 µm et que le grammage de cette feuille est de l'ordre de 220 g/m².

3. Séparateur selon l'une des revendications 1 et 2, caractérisé par le fait qu'il est assemblé autour des électrodes de l'accumulateur sous forme de pochettes soudées.

4. Séparateur selon l'une des revendications 1 et 2, caractérisé par le fait qu'il se présente sous la forme d'une bande continue disposée en accordéon entre les électrodes négatives et positives de l'accumulateur.

## Patentansprüche

1. Separator für einen alkalischen Akkumulator und insbesondere für einen Nickel-Kadmium-Akkumulator, wobei der Separator aus zwei Polypropylen-, Polyamid- oder Polyäthylen-Filzfolien einer Dicke zwischen 0,1 mm und 0,4 mm und eines Flächengewichts zwischen 10 und 100 g/m² und einer Zwischenfolie besteht, die zwischen diese beiden Separatoren eingefügt ist, dadurch gekennzeichnet, daß die Zwischenfolie eben ist, daß sie eine Dicke zwischen 0,1 mm und 0,4 mm aufweist, daß sie aus einem gesinterten Kopolymer auf der Basis von Polyvinylchlorid oder Polyäthylen besteht, daß ihre Porosität über 30% liegt, daß der Durchmesser ihrer Poren zwischen 10 µm und 100 µm liegt und daß ihr Flächengewicht zwischen 100 g/m² und 400 g/m² beträgt.

2. Separator nach Anspruch 1, dadurch gekennzeichnet, daß der Porendurchmesser dieser Folie zwischen 20 µm und 30 µm liegt und das Flächengewicht etwa 220 g/m² beträgt.

3. Separator nach einem der Ansprüche 1 und 2, dadurch gekennzeichnet, daß er um Akkumulator-Elektroden des in Form von gelöteten Taschen herumgelegt ist.

4. Separator nach einem der Ansprüche 1 und 2, dadurch gekennzeichnet, daß er in Form eines kontinuierlichen Bands vorliegt, das faltenbalgförmig zwischen den negativen und positiven Elektroden des Akkumulators angeordnet ist.

## Claims

1. A separator for an alkaline storage cell, in particular for a nickel-cadmium storage cell, the separator being constituted by two sheets of polypropylene, polyamide, or polyethylene felt having a thickness lying in the range 1.0 mm and 0.4 mm, and having a weight lying in the range 10 g/m² to 100 g/m², together with an intermediate sheet interposed between said two felts, the separator being characterized by the fact that said intermediate sheet is plane, has a thickness lying in the range 0.1 mm to 0.4 mm, is made of a sintered copoylmer based on polyvinyl chloride or on polyethylene, has a porosity of not less than 30%, has pores of a diameter lying in the range 10 µm to 100 µm, and has a weight lying in the range 100 g/m² to 400 g/m².

2. A separator according to claim 1, characterized by the fact that the pore diameter of said sheet lies in the range 20 µm to 30 µm, and the weight of said sheet is about 220 g/m².

3. A separator according to claim 1 or 2, characterized by the fact that it is assembled around the electrodes of the storage cell in the form of bonded pockets.

4. A separator according to claim 1 or 2, characterized by the fact that it is in the form of a continuous strip disposed concertina-like between the positive and negative electrodes of the cell.
